# EUROPÄISCHE PATENTSCHRIFT

(11) **EP 1 556 927 B1**
(45) Veröffentlichungstag und Bekanntmachung des Hinweises auf die Patenterteilung: **28.01.2009**
(21) Anmeldenummer: 03775238.3
(22) Anmeldetag: 27.10.2003
(51) Int. Cl.: H01R 39/16, H01R 43/06

(54) **KOMMUTATOR FÜR EINE ELEKTRISCHE MASCHINE UND VERFAHREN ZU SEINER HERSTELLUNG**
COMMUTATOR FOR AN ELECTRICAL MACHINE AND METHOD FOR PRODUCING THE SAME
COMMUTATEUR POUR MACHINE ELECTRIQUE ET PROCEDE POUR LE REALISER

(30) Priorität: 28.10.2002 DE 10250261
(43) Veröffentlichungstag der Anmeldung: 27.07.2005
(73) Patentinhaber: Kolektor Group d.o.o., 5280 Idrija (SI)
(72) Erfinder: POTOCNIK, Joze, 5280 Idrija (SI)
(74) Vertreter: Grättinger & Partner (GbR)
(86) Internationale Anmeldenummer: PCT/EP2003/011917
(87) Internationale Veröffentlichungsnummer: WO 2004/038905

(56) Entgegenhaltungen:
- EP-A- 0 501 787
- DE-A- 19 642 138
- US-A- 1 845 115
- US-A- 1 928 325
- US-A- 3 140 414
- US-A- 3 280 354
- US-A- 3 293 694
- US-A- 3 864 821
- US-A- 4 456 846
- US-A- 5 003 212
- OBERBACH: "Saechttling Kunststoff Taschenbuch" 1998, CARL HANSER VERLAG MÜNCHEN WIEN , XP002288067 ISSN: 1430-7997 ISBN: 3-446-19054-6 Seite 638 - Seite 651

## Beschreibung

Die vorliegende Erfindung betrifft einen Kommutator für eine elektrische Maschine, umfassend einen aus Formmasse gefertigten Trägerkörper und eine Mehrzahl von an diesem gleichmäßig um die Kommutatorachse herum angeordneten metallischen Leitersegmenten mit daran angeordneten Anschlußelementen. Des weiteren betrifft die vorliegende Erfindung ein Verfahren zur Herstellung eines derartigen Kommutators.

Ein Kommutator gemäß dem Oberbegriff des Anspruchs 1 ist aus US 5,003,212 bekannt.

Kommutatoren der vorstehend angegebenen Art sind in zwei grundlegend unterschiedlichen Bauarten bekannt, nämlich als Trommelkommutatoren und als Plankommutatoren. Während Trommelkommutatoren eine zylindrisch um die Kommutatorachse herum angeordnete Bürstenlauffläche aufweisen, liegt bei Plankommutatoren die Bürstenlauffläche in einer senkrecht zur Kommutatorachse angeordneten Ebene. Jeweils dient der Trägerkörper, der bei Trommelkommutatoren im allgemeinen hülsenförmig ausgebildet ist, der Sicherung der Lage der metallischen Leitersegmente in ihrer vorgegebenen Anordnung auch unter wechselnden Betriebsbedingungen, der Isolierung der einzelnen Leitersegmente untereinander sowie der Befestigung des Kommutators auf der Rotorwelle der mit ihm zu bestückenden elektrischen Maschine, wobei auch eine Isolierung der Leitersegmente gegenüber der Rotorwelle erfolgt. Im Hinblick auf diese Funktionen wird der Trägerkörper im allgemeinen aus isolierender Formmasse, zumeist auf der Basis von Phenolharz, geformt, wobei die - bisweilen auch als Preßmasse oder Preßstoff bezeichnete - Formmasse in einem entsprechenden Formhohlraum eines Spritzwerkzeugs dergestalt um Ankerteile der Leitersegmente herum gepreßt wird, daß jene Ankerteile in den späteren Trägerkörper fest eingebettet sind.

Im Rahmen der Herstellung von Kommutatoren beider Bauweisen können einzelne vorgefertigte Leitersegmente oder aber ein die Leitersegmente umfassender Leiterrohling zum Einsatz kommen, wobei im an zweiter Stelle genannten Fall der Leiterrohling nach dem Spritzen des Trägerkörpers mittels Schnitten oder durch Abdrehen in die einzelnen gegeneinander isolierten Leitersegmente unterteilt wird.

Bekannt sind auch Kommutatoren, deren Trägerkörper nicht oder jedenfalls nicht allein aus Formmasse bestehen. So beschreiben die EP 0325353 B1 und die DE 19642138 A1 jeweils die Vormontage der einzelnen Leitersegmente eines Trommelkommutators auf einem aus Kunststoff bestehenden, vorgefertigten Montagekorb, der im weiteren Verlauf mit Formmasse umspritzt wird und auf diese Weise einen bleibenden, integralen Bestandteil des Kommutators bildet. Gemäß der DE 3714098 A1 umfaßt der Trägerkörper ein hülsenförmiges Nabenteil, welches aus Metall oder Isolierstoff bestehen kann, und einen dünnwandigen Isoliermantel (Schlauch, Wickelfolie oder dergleichen). Die Leitersegmente werden um diesen Trägerkörper herum angeordnet und mittels Armierungsringen gegen den Trägerkörper verspannt. Die zwischen den Leitersegmenten bestehenden Zwischenräume können, müssen jedoch nicht, anschließend mit Formmasse gefüllt werden.

Die große Anzahl von Konstruktionsvorschlägen, die sich mit gattungsgemäßen Kommutatoren befassen, belegt den großen Bedarf an praxistauglichen Kommutatoren dieser Bauart. Zugleich läßt sich hieraus entnehmen, daß es eine Vielzahl von Problemkreisen gibt, die bisher nicht in zufriedenstellendem Maße gelöst wurden.

Dies hängt unter anderem damit zusammen, daß bei bekannten gattungsgemäßen Kommutatoren verschiedene Anforderungen z.T. zueinander konkurrieren; hierzu zählen insbesondere die Ziele geeignete Baugröße, hoher Wirkungsgrad, namentlich bei hohen Stromstärken, niedrige Herstellkosten sowie hohe Zuverlässigkeit und Lebensdauer des Kommutators. Gerade im Hinblick auf die beiden zuletzt genannten Kriterien kommt es auch auf die Ausführung des Trägerkörpers an. Denn bei solchen Kommutatoren, deren Trägerkörper unter Verwendung üblicher, auf Phenolharz basierender Formmassen hergestellt worden sind, leiden in gleicher Weise der Wirkungsgrad und die Zuverlässigkeit und Lebensdauer des Kommutators unter einem das Entstehen von Kriechströmen begünstigenden Verkohlen insbesondere der zwischen den Leitersegmenten im Bereich der Luftisolationsspalte freiliegenden Oberfläche des Trägerkörpers. Auf der anderen Seite weisen auch solche Kommutatoren, deren Trägerkörper aus relativ kriechstromfester Formmasse hergestellt worden sind, eine nur unbefriedigende Lebensdauer auf, weil in diesem Falle der Trägerkörper eine nur vergleichsweise geringe Dimensionsstabilität aufweist, so daß die Bürstenlauffläche im Betrieb, namentlich bei erhöhten Temperaturen, bei Trommelkommutatoren unrund (Lamellensprung, Exzentrizität, etc.) bzw. bei Plankommutatoren uneben werden kann.

Die vorliegende Erfindung zielt darauf ab, einen Kommutator der eingangs angegebenen Art zu schaffen, der sich vergleichsweise kostengünstig herstellen läßt und zugleich trotz einer hohen Zuverlässigkeit und Lebensdauer einen hohen Wirkungsgrad insbesondere bei hohen Stromstärken aufweist.

Gelöst wird die vorstehend angegebene Aufgabenstellung gemäß der vorliegenden Erfindung dadurch, daß der Trägerkörper zwei aus unterschiedlichen Formmassen hergestellte, formschlüssig aneinander gepresste Bereiche, nämlich eine Trägerkörperbasis und einen Kriechstromschutzbelag, aufweist, wobei der radial nach außen offene, mit Kriechstrom belastete Isolieroberflächen aufweisende Kriechstromschutzbelag zwischen den Leitersegmenten angeordnet ist und aus einer ersten Formmasse besteht, die kriechstromfester ist als die zweite Formmasse der Trägerkörperbasis. Wesentlich ist nach der vorliegenden Erfindung somit insbesondere, daß der Trägerkörper aus zwei verschiedenen Formmassen, die unterschiedliche Materialeigenschaften aufweisen, besteht, wobei die zwischen den Leitersegmenten angeordneten, jeweils eine radial nach außen offene, mit Kriechstrom belastete Isolieroberfläche aufweisenden Kriechstromschutzbeläge eine höhere Kriechstromfestigkeit aufweisen als der die Trägerkörperbasis bildende restliche Formmassebereich. Ein besonderer Vorteil des nach der vorliegenden Erfindung aufgebauten Kommutators liegt in dessen besonders hohem Wirkungsgrad bei hoher Zuverlässigkeit, ohne daß diese Qualitäten zu nicht gerechtfertigten Herstellungskosten führen würden. Denn in Anwendung der vorliegenden Erfindung lassen sich Kommutatoren herstellen, deren Trägerkörper äußerst dimensionsstabil sind, so daß sich selbst unter extremen Betriebsbedingungen keine nennenswerte Unrundheit bzw. Unebenheit der Bürstenlauffläche ergibt, wobei zugleich die Gefahr einer Wirkungsgradeinbuße bzw. eines Ausfalls des Kommutators infolge von Kriechströmen minimiert ist. Als besonders günstig erweist sich in diesem Zusammenhang, daß bei erfindungsgemäßen Kommutatoren sämtliche drei bei Kommutatoren herkömmlicher Bauart für eine Kriechstrombildung anfälligen Oberflächen, nämlich die Isolationsoberflächen zwischen jeweils zwei Leitersegmenten, im Bereich der den Anschlußelementen benachbarten Lacksperre wie auch im Bereich der den Anschlußelementen gegenüberliegenden Stirnseite, wirksam vor einem Verkohlen geschützt werden.

Wenngleich sich die vorliegende Erfindung in besonderer Weise zur Realisierung bei Trommelkommutatoren eignet, so ist sie hierauf nicht beschränkt. Vielmehr läßt sich die Erfindung grundsätzlich in entsprechender Weise auch bei Plankommutatoren anwenden. Somit liegt, soweit im folgenden zur Erläuterung der Erfindung auf Trommelkommutatoren Bezug genommen wird, hierin keine Beschränkung der Erfindung auf Kommutatoren dieser Bauart.

Gemäß einer ersten bevorzugten Weiterbildung der Erfindung ist vorgesehen, daß die Formmasse des Kriechstromschutzbelags auf Polyester, Melamin-Formaldehyd, Epoxid, Allylester oder einem anderen kriechstromfesten Harz, auf einer Kombination mehrerer dieser Harze oder auf einer Kombination mindestens eines dieser Harze mit Phenolharz basiert. In diesem Falle ist mit einer etwa doppelt so großen Kriechstromfestigkeit an den gefährdeten Oberflächen des Trägerkörpers zu rechnen, verglichen mit der üblichen Herstellung des gesamten Trägerkörpers aus Phenolharz. Die Trägerkörperbasis weist demgegenüber bessere mechanische Eigenschaften, insbesondere eine höhere thermische Festigkeit und Formstabilität auf als der Kriechstromschutzbelag; er besteht besonders bevorzugt aus einer auf Phenolharz basierenden bzw. Phenolharz enthaltenden Formmasse. Um in dem vorstehend erläuterten Sinne den erfindungsgemäßen Kommutator hinsichtlich seiner praxisrelevanten Eigenschaften zu optimieren, reicht für den Kriechstromschutzbelag eine vergleichsweise geringe radiale Schichtstärke aus, die bei Kommutatoren üblicher Dimensionen beispielsweise zwischen 0,5 und 3 mm betragen kann.

Gemäß einer anderen bevorzugten Weiterbildung der Erfindung ist vorgesehen, daß die größte in Umfangsrichtung gemessene Breite der einzelnen Bereiche des Kriechstromschutzbelags größer ist als die Breite der zwischen jeweils zwei benachbarten Leitersegmenten bestehenden Luftisolationsspalte. Dabei kann insbesondere die Breite der einzelnen Bereiche des Kriechstromschutzbelags in radialer Richtung von außen nach innen zunehmen, wobei die der einzelnen Bereiche des Kriechstromschutzbelags über ihre gesamte Schichtdicke formschlüssig an den beiden jeweils benachbarten Leitersegmenten anliegen. Diese Ausführung wirkt sich günstig auf die Dimensionsstabilität und den sicheren Halt des Kriechstromschutzbelags und somit auf die Lebensdauer des erfindungsgemäßen Kommutators aus. Namentlich gilt dies, wenn, gemäß einer weiteren bevorzugten Weiterbildung der Erfindung, die Leitersegmente radial nach innen gerichtete Ankerteile aufweisen, die sowohl in dem Kriechstromschutzbelag als auch in der Trägerkörperbasis verankert sind.

Eine wiederum andere bevorzugte Weiterbildung der Erfindung zeichnet sich dadurch aus, daß der Kriechstromschutzbelag nach außen weisende, sich über einen Teil der Dicke erstreckende Nuten aufweist, die zu dem jeweils zugeordneten Luftisolationsspalt ausgerichtet sind und diesen radial nach innen fortsetzen. Solchermaßen weitergebildete Kommutatoren zeichnen sich durch eine besonders geringe Gefahr, durch Kriechströme Schaden zu nehmen, aus.

Gemäß einer wiederum anderen bevorzugten Weiterbildung der Erfindung ist vorgesehen, daß der Kriechstromschutzbelag und die Trägerkörperbasis jeweils an gemeinsamen Grenzflächen aneinander anliegen. Jene Grenzflächen können dabei insbesondere uneben, reliefartig strukturiert sein, so daß der Kriechstromschutzbelag und die Trägerkörperbasis formschlüssig ineinandergreifen. Auf der anderen Seite können die Grenzflächen auch eben ausgeführt sein. In diesem Zusammenhang kommt es in erheblichem Maße auf das Verfahren, gemäß welchem der erfindungsgemäße Kommutator hergestellt wird, an. Dies wird weiter unten in größerem Detail ausgeführt.

Bei erfindungsgemäßen Kommutatoren können die radial nach außen weisenden Isolieroberflächen der einzelnen Bereiche des Kriechstromschutzbelags insbesondere benachbart zu den Anschlußelementen jeweils eine nach außen, in Richtung auf die Bürstenlauffläche gerichtete Nase aufweisen.

Ein besonders bevorzugtes Verfahren zu Herstellung eines Kommutators nach der vorliegenden Erfindung umfaßt die folgenden Schritte: Einlegen metallischer Leitersegmente in ein Werkzeug; Einfüllen von erster, relativ kriechstrombeständiger Formmasse in jeweils zwischen zwei einander benachbarten Leitersegmenten bestehende Zwischenräume, welche jeweils radial innen durch eine Rippe eines ersten Innenwerkzeugs begrenzt sind; Entfernen des ersten Innenwerkzeugs; Einsetzen eines zweiten Innenwerkzeugs, welches die Kontur des zu formenden Trägerkörpers definiert; Einpressen von zweiter, relativ hitze- und formbeständiger Formmasse in das Werkzeug, wobei beide Formmassen durch Druck und Wärme der zweiten Formmasse vernetzt und ausgehärtet werden. Besonders günstig an diesem Verfahren ist, daß nur ein einziger Preßvorgang für die Formmasse erforderlich ist, denn die erste Formmasse kann drucklos in die weiter oben definierten Zwischenräume eingefüllt werden; dementsprechend wird auch nur eine einzige zum Pressen des Trägerkörpers geeignete Form benötigt. Die erste Formmasse ist dabei während des Einfüllens bevorzugt von teigiger Konsistenz, so daß sie einerseits nach Entfernen des ersten Innenwerkzeugs nicht aus dem Werkzeug herausfließen, andererseits jedoch durch die unter Druck in die Form eingepreßtes zweite Formmasse verformt werden kann. In diesem Zusammenhang erweist es sich als besonders günstig, wenn die erste Formmasse auf Duroplasten basiert und im Zeitpunkt des Einpressens der zweiten Formmasse noch nicht ausgehärtet ist, so daß die erste Formmasse während des Einpressens der zweiten Formmasse zur formschlüssigen Anlage an den Leitersegmenten verformt wird. Insbesondere kann dabei die erste Formmasse auf Polyester, Melamin-Formaldehyd, Epoxid, Allylester oder anderen kriechstromfesten Harzen oder auf Kombinationen dieser Harze basieren.

Im Rahmen des vorstehend erläuterten Herstellverfahrens können die Leitersegmente anfangs Teil eines einstückigen Leiterrohlings sein und erst nach Ausformung des Trägerkörpers voneinander getrennt werden, beispielsweise durch Sägeschnitte oder Abdrehen von die einzelnen Leitersegmente miteinander verbindenden Brückenteilen. In diesem Falle können die Zwischenräume, in welche die erste, der Bildung des Kriechstromschutzbelages dienende Formmasse eingefüllt wird, radial außen durch die Brückenteile des Leiterrohlings begrenzt sein. In gleicher Weise läßt sich das vorstehend erläuterte Herstellverfahren jedoch auch bei Verwendung einzelner vorgefertigter Leitersegmente, die in als solches bekannter Weise in einen Montagekorb eingesetzt sind, realisieren. In diesem Falle ist es besonders günstig, wenn die genannten Zwischenräume radial außen durch Distanzleisten, welche Teil des Montagekorbes sind, begrenzt sind.

Ein alternatives Verfahren zu Herstellung eines Kommutators nach der vorliegenden Erfindung umfaßt die folgenden Schritte: Einlegen metallischer Leitersegmente in ein erstes Werkzeug; Einpressen einer der beiden Formmassen in einen zugeordneten Hohlraum des ersten Werkzeugs; Aushärtenlassen der eingepreßten Formmasse; Entnehmen des die Leitersegmente und die ausgehärtete Formmasse umfassenden Zwischenprodukts aus dem ersten Werkzeug und Einlegen dieses Zwischenprodukts in ein zweites Werkzeug; Einpressen der anderen Formmasse in einen zugeordneten Hohlraum des zweiten Werkzeugs; Aushärtenlassen der im zweiten Einpreßschritt eingepreßten Formmasse. Eine charakteristischer Vorteil dieser Herstellungsweise ist, daß auch erste, kriechstromfeste Formmassen zum Einsatz kommen können, die zum Zeitpunkt ihrer Verarbeitung vergleichsweise dünnflüssig sind; auch können, was bei der weiter oben beschriebenen ersten Verfahrensvariante nicht ohne weiteres möglich ist, zur Herstellung des Kriechstromschutzbelags kriechstromfeste thermoplastische Formmassen zum Einsatz kommen. Allerdings werden, nachdem die beiden den Trägerkörper bildenden Formmassen getrennt voneinander gepreßt werden, zwei entsprechend geeignete Formen benötigt.

Lediglich der Vollständigkeit halber ist darauf hinzuweisen, daß sich die vorliegende Erfindung in gleicher Weise bei Kommutatoren mit Armierungsringen und bei Kommutatoren ohne Armierungsringe einsetzen läßt. Aus dem Umstand, daß sich die nachfolgende Erläuterung bevorzugter Ausführungsbeispiele der Erfindung lediglich auf Kommutatoren ohne Armierungsringe bezieht, kann eine dahingehende Beschränkung der Erfindung nicht hergeleitet werden.

Im folgenden wird die vorliegende Erfindung anhand zweier in der Zeichnung veranschaulichter bevorzugter, jeweils einen Trommelkommutator betreffender Ausführungsbeispiele näher erläutert. Dabei zeigt
- Fig. 1: einen Axialschnitt durch eine erste Ausführungsform eines gemäß der vorliegenden Erfindung aufgebauten Trommelkommutators,
- Fig. 2: einen vergrößerten Querschnitt durch den Trommelkommutator gemäß Fig. 1 entlang der Linie II-II,
- Fig. 3: den Ausschnitt einer Seitenansicht des Trommelkommutators gemäß den Fig. 1 und 2,
- Fig. 4: einen Querschnitt durch ein zur Herstellung des Trommelkommutators nach den Fig. 1 bis 3 eingesetztes Werkzeug während eines Zwischenschritts der Herstellung des entsprechenden Trommelkommutators und
- Fig. 5: einen Querschnitt durch eine zweite Ausführungsform eines nach der vorliegenden Erfindung aufgebauten Trommelkommutators.

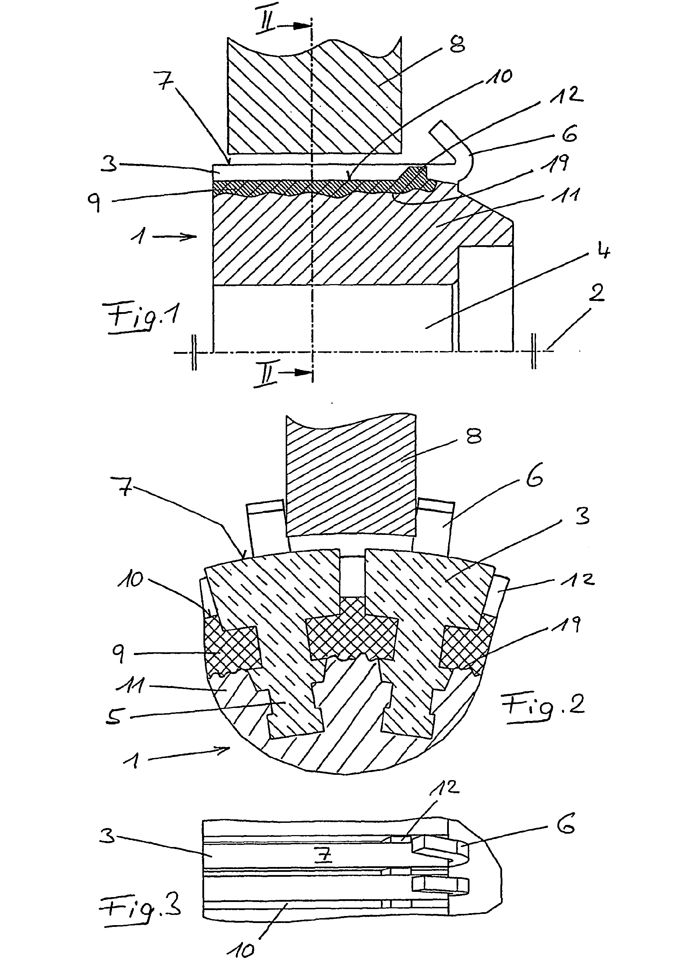

Der in den Fig. 1 bis 3 der Zeichnung veranschaulichte Trommelkommutator umfaßt als wesentliche Bauteile einen aus Formmasse hergestellten Trägerkörper 1 und gleichmäßig um die Kommutatorachse 2 herum angeordnete Leitersegmente 3. Zwischen zwei einander benachbarten Leitersegmenten 3 besteht jeweils ein Luftisolationsspalt. Der Trägerkörper 1 weist eine zur Achse 2 konzentrische Bohrung 4 auf, welche der Anordnung des Kommutators auf einer Rotorwelle dient.

Radial innen an den Leitersegmenten 3 angeordnete Ankerteile 5 sind in die Formmasse des Trägerkörpers 1 eingebettet, um die Leitersegmente auch bei hohen Drehzahlen trotz der dann herrschenden Fliehkräfte sicher zu verankern. Endseitig sind an den Leitersegmenten 3 als Anschlußfahnen 6 ausgeführte Anschlußelemente vorgesehen, die, in als solches bekannter Weise, dem Anschluß von Wicklungsdrähten an den Kommutator dienen. Erkennbar könnten die Anschlußelemente alternativ statt als Anschlußfahnen auch auf sonstige geeignete Weise ausgeführt sein, z.B. in Form von Schlitzen bzw. als Lötkranz. Die auf einer Zylinderfläche angeordneten radialen Außenflächen 7 der Leitersegmente 3 bilden die Lauffläche für die Bürsten 8.

Im Umfang der vorstehenden Ausführungen entspricht der in den Fig. 1 bis 3 der Zeichnung dargestellte Kommutator dem hinlänglich bekannten Stand der Technik, so daß es weiterer Erläuterungen nicht bedarf.

Der Trägerkörper 1 besteht aus zwei verschiedenen Formmassen, die unterschiedliche Materialeigenschaften aufweisen; er umfaßt einen Kriechstromschutzbelag 9, dessen einzelne Bereiche jeweils eine zwischen den Leitersegmenten 3 angeordnete, radial nach außen offene Isolieroberfläche 10 aufweisen, und eine Trägerkörperbasis 11, die den restlichen Teil des Trägerkörpers 1 einnimmt. Gemäß der vorliegenden Erfindung weist der nur eine relativ geringe radiale Dicke aufweisende Kriechstromschutzbelag 9 dabei eine höhere Kriechstromfestigkeit auf als die Trägerkörperbasis 11. Bei dem veranschaulichten Ausführungsbeispiel wird dies dadurch erreicht, daß die Trägerkörperbasis 11 aus einer Phenolharz enthaltenden Formmasse besteht, während der Kriechstromschutzbelag 9 aus einer Polyesterharz, Melaminharz und/oder Epoxyharz enthaltenden Formmasse besteht. Bei einer derartigen Materialpaarung weist die Trägerkörperbasis 11 bessere mechanische Eigenschaften, insbesondere eine höhere thermische Festigkeit auf als der Kriechstromschutzbelag 9.

Die radial nach innen gerichteten Ankerteile 5 der Leitersegmente 3 sind durch entsprechende Einbettung in die jeweilige Formmasse sowohl in dem Kriechstromschutzbelag 9 als auch in der Trägerkörperbasis 11 verankert.

Die radial nach außen weisenden, gegenüber der Bürstenlauffläche nach innen versetzten Isolieroberflächen 10 des Kriechstromschutzbelags 9 weisen benachbart zu den Anschlußfahnen 6 jeweils eine nach außen gerichtete Nase 12 auf.

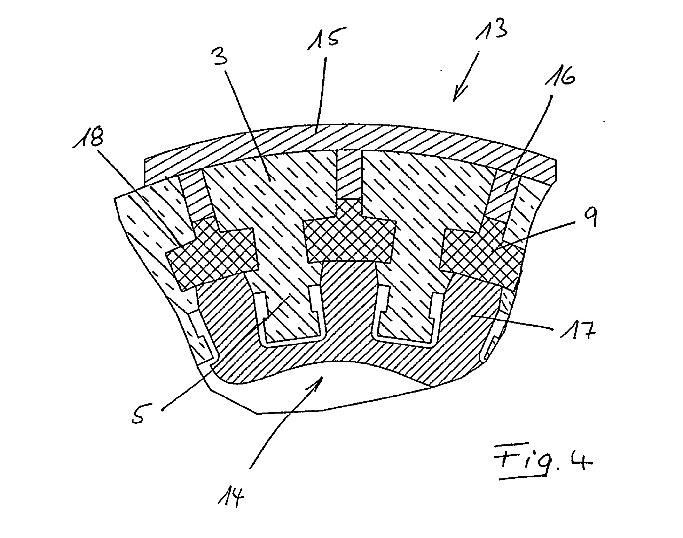

Fig. 4 veranschaulicht denjenigen Verfahrensschritt während der Herstellung des in den Figuren 1 bis 3 veranschaulichten Trommelkommutators, in dem die Bildung des aus relativ kriechstromfester Formmasse bestehenden Kriechstromschutzbelags 9 beginnt. Zum Einsatz kommt dabei ein mehrteiliges Werkzeug, welches ein Außenwerkzeug 13 und ein erstes Innenwerkzeug 14 umfaßt. Das Außenwerkzeug 13 umfaßt dabei seinerseits einen Mantel 15, an dessen Innenfläche Distanzleisten 16 eines Montagekorbes anliegen. Letztere geben den Abstand zwischen je zwei einander benachbarten Leitersegmenten 3 vor und definieren somit die Abmessungen der späteren Luftisolationsspalte des Trommelkommutators. Das erste Innenwerkzeug 14 umfaßt radial nach außen gerichtete Rippen 17. Diese liegen mit seitlichen Dichtflächen jeweils an den Ankerteilen 5 zweier einander benachbarter Leitersegmente 3 an. Auf diese Weise wird durch zwei einander benachbarte Leitersegmente 3, eine zwischen diesen angeordnete Distanzleiste 16 und eine ebenfalls zwischen den betreffenden Leitersegmenten 3 angeordnete Rippe 17 jeweils ein Zwischenraum 18 begrenzt, welcher zur Bildung jeweils eines einzelnen Bereichs der Kriechstromschutzbelags 9 mit erster, kriechstromfester Formmasse aufgefüllt werden kann, wie dies in Fig. 4 veranschaulicht ist.

Nachdem das erste Innenwerkzeug 14 entfernt worden ist, kommt ein - nicht dargestelltes - zweites Innenwerkzeug zum Einsatz, welches über einen entsprechenden Formhohlraum die Kontur des zu fertigenden Trägerkörpers vorgibt. In jenen Formhohlraum wird die zur Bildung der Trägerkörperbasis 11 erforderliche Menge an relativ formbeständiger Formmasse eingepreßt, wobei sich die erste Formmasse unter dem entsprechenden Druck und der Temperatur formschlüssig und fest an die zugeordneten Leitersegmente 3 anlegt. Wie dies in den Fig. 1 und 2 veranschaulicht ist, kommt es dabei zur Ausbildung einer unebenen, reliefartig strukturierten Grenzfläche 19 zwischen der Trägerkörperbasis 11 und dem Kriechstromschutzbelag 9, an der die beiden Formmassen formschlüssig ineinandergreifen. Infolge der durch die zweite Formmasse eingebrachten Wärme kommt es zu einer Vernetzung und Aushärtung auch der ersten Formmasse.

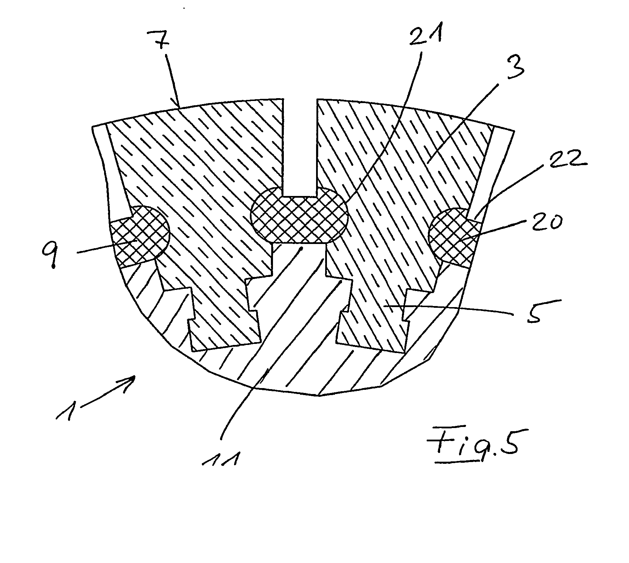

Fig. 5 veranschaulicht die Herstellung eines (andere konstruktive Details aufweisenden) erfindungsgemäßen Trommelkommutators in Anwendung eines alternativen Herstellungsverfahrens. In einem ersten Fertigungsschritt wird unter Verwendung eines ersten Werkzeugs die Trägerkörperbasis 11 hergestellt, indem eine formbeständige Formmasse unter Druck in den entsprechenden Formhohlraum des ersten Werkzeugs eingespritzt wird. Nachdem die auf diese Weise hergestellte Trägerkörperbasis 11 ausgehärtet ist, wird das Zwischenprodukt in ein zweites Werkzeug eingelegt, in welchem durch Einspritzen der zweiten, kriechstromfesten Formmasse in einen entsprechenden Formhohlraum die einzelnen Bereiche 20 des Kriechstromschutzbelags 9 gebildet werden und auf diese Weise die Bildung des Trägerkörpers 1 abgeschlossen wird. Die einzelnen Bereiche 20 des Kriechstromschutzbelags 9 greifen beidseitig in entsprechende Aussparungen 21 der Leitersegmente 3 ein. Im Bereich ihrer Isolationsfläche 10 weisen die einzelnen Bereiche 20 des Kriechstromschutzbelags 9 jeweils eine Nut 22 auf, die zu dem jeweils zugeordneten Luftisolationsspalt ausgerichtet ist und diesen radial nach innen fortsetzt.

Erkennbar ist es im Rahmen der Erfindung auch möglich, bei der vorstehend erläuterten Verfahrensweise die beiden Fertigungsschritte in einer umgekehrten Reihenfolge ablaufen zu lassen.

Lediglich zur Klarstellung ist zu ergänzen, daß sich der in Fig. 5 illustrierte Kommutator erkennbar auch in Anwendung der ersten Verfahrensvariante herstellen läßt, ebenso wie sich die zweite Verfahrensvariante zur Herstellung des Kommutators nach den Fig. 1 bis 3 - ggfs. abgesehen von der spezifischen Ausbildung der Grenzfläche 19 - eignet.

## Patentansprüche

1. Kommutator für eine elektrische Maschine, umfassend einen aus Formmasse gefertigten Trägerkörper (1) und eine Mehrzahl von an diesem gleichmäßig um die Kommutatorachse (2) herum angeordneten metallischen Leitersegmenten (3) mit daran angeordneten Anschlußelementen, wobei zwischen jeweils zwei einander benachbarten Leitersegmenten ein Luftisolationsspalt besteht und der Trägerkörper (1) zwei aus unterschiedlichen Formmassen hergestellte Bereiche, nämlich eine Trägerkörperbasis (11) und einen Kriechstromschutzbelag (9), aufweist, wobei der radial nach außen offene, mit Kriechstrom belastete Isolieroberflächen (10) aufweisende Kriechstromschutzbelag (9) zwischen den Leitersegmenten (3) angeordnet ist und aus einer ersten Formmasse besteht, die kriechstromfester ist als die zweite Formmasse der Trägerkörperbasis (11),
**dadurch gekennzeichnet,**
**daß** die Formmasse der Trägerkörperbasis und die Formmasse des Kriechstromschutzbelags formschlüssig aneinander gepreßt sind.

2. Kommutator nach Anspruch 1,
**dadurch gekennzeichnet,**
**daß** die Formmasse des Kriechstromschutzbelags (9) auf Polyester, Melamin-Formaldehyd, Epoxid, Allylester oder einem anderen kriechstromfesten Harz, oder auf einer Kombination mehrerer dieser Harze oder auf einer Kombination mindestens eines dieser Harze mit Phenolharz basiert.

3. Kommutator nach Anspruch 1 oder Anspruch 2,
**dadurch gekennzeichnet,**
**daß** die Trägerkörperbasis (11) bessere mechanische Eigenschaften, insbesondere eine höhere thermische Festigkeit aufweist als der Kriechstromschutzbelag (9).

4. Kommutator nach einem der Ansprüche 1 bis 3,
**dadurch gekennzeichnet,**
**daß** die Trägerkörperbasis (11) aus einer Phenolharz enthaltenden Formmasse besteht.

5. Kommutator nach einem der Ansprüche 1 bis 4, **dadurch gekennzeichnet,**
**daß** die größte in Umfangsrichtung gemessene Breite der einzelnen Bereiche des Kriechstromschutzbelags (9) gröβer ist als die Breite der zwischen jeweils zwei benachbarten Leitersegmenten (3) bestehenden Luftisolationsspalte.

6. Kommutator nach Anspruch 5,
**dadurch gekennzeichnet,**
**daß** die Breite der einzelnen Bereiche des Kriechstromschutzbelags (9) in radialer Richtung von außen nach innen zunimmt, wobei die einzelnen Bereiche des Kriechstromschutzbelags über ihre gesamte Schichtdicke formschlüssig an den beiden jeweils benachbarten Leitersegmenten (3) anliegen.

7. Kommutator nach einem der Ansprüche 1 bis 6,
**dadurch gekennzeichnet,**
**daß** die radial nach außen weisenden Isolieroberflächen (10) des Kriechstromschutzbelags (9) benachbart zu den Anschlußelementen jeweils eine nach außen gerichtete Nase (12) aufweisen.

8. Kommutator nach einem der Ansprüche 1 bis 7, **dadurch gekennzeichnet,**
**daß** der Kriechstromschutzbelag (9) und die Trägerkörperbasis (11) jeweils an gemeinsamen Grenzflächen (19) aneinander anliegen.

9. Kommutator nach einem der Ansprüche 1 bis 8,
**dadurch gekennzeichnet,**
**daß** der Kriechstromschutzbelag (9) nach außen weisende, sich über einen Teil der Dicke erstreckende Nuten (22) aufweist, die zu dem jeweils zugeordneten Luftisolationsspalt ausgerichtet sind und diesen radial nach innen fortsetzen.

10. Kommutator nach Anspruch 8,
**dadurch gekennzeichnet,**
**daß** die Grenzflächen (19) uneben, reliefartig strukturiert sind, so daß der Kriechstromschutzbelag (9) und die Trägerkörperbasis (11) formschlüssig ineinandergreifen.

11. Kommutator nach Anspruch 8,
**dadurch gekennzeichnet,**
**daß** die Grenzflächen (19) eben sind.

12. Kommutator einem der Ansprüche 1 bis 11, **dadurch gekennzeichnet,**
**daß** die Leitersegmente (3) Ankerteile (5) aufweisen, die sowohl in dem Kriechstromschutzbelag (9) als auch in der Trägerkörperbasis (11) verankert sind.

13. Verfahren zu Herstellung eines Trommelkommutators nach Anspruch 1, umfassend die folgenden Schritte:
- Einlegen metallischer Leitersegmente (3) in ein Werkzeug;
- Einfüllen von erster, relativ kriechstrombeständiger Formmasse in jeweils zwischen zwei einander benachbarten Leitersegmenten (3) bestehende Zwischenräume (18), welche jeweils radial innen durch eine Rippe (17) eines ersten Innenwerkzeugs (14) begrenzt sind;
- Entfernen des ersten Innenwerkzeugs (14);
- Einsetzen eines zweiten Innenwerkzeugs, welches die Kontur des zu formenden Trägerkörpers (1) definiert;
- Einpressen von zweiter, relativ hitze- und formbeständiger Formmasse in das Werkzeug;
- Aushärtenlassen des Trägerkörpers;
- Entnehmen des Kommutators aus dem Werkzeug.

14. Verfahren nach Anspruch 13,
**dadurch gekennzeichnet,**
**daß** die erste Formmasse vor dem Einpressen der zweiten Formmasse aushärtet.

15. Verfahren nach Anspruch 13,
**dadurch gekennzeichnet,**
**daß** die erste Formmasse auf Duroplasten basiert und während des Einpressens der zweiten Formmasse verformt wird und
**daß** die erste Formmasse zum Zeitpunkt des Einpressens der zweiten Formmasse noch nicht ausgehärtet ist.

16. Verfahren nach Anspruch 15,
**dadurch gekennzeichnet**
**daß** beide Formmassen durch Druck und Wärme der zweiten Formmasse vernetzt und ausgehärtet werden;

17. Verfahren nach einem der Ansprüche 13 bis 16,
**dadurch gekennzeichnet,**
**daß** daß die erste Formmasse auf Polyester, Melamin-Formaldehyd, Epoxid, Allylester oder anderen kriechstromfesten Harzen oder auf Kombinationen dieser Harze basiert.

18. Verfahren nach einem der Ansprüche 13 bis 17,
**dadurch gekennzeichnet,**
**daß** die Leitersegmente (3) anfangs Teil eines einstückigen Leiterrohlings sind und erst nach Ausformung des Trägerkörpers (1) voneinander getrennt werden.

19. Verfahren nach Anspruch 18,
**dadurch gekennzeichnet,**
**daß** die Zwischenräume (18) radial außen durch Brückenteile des Leiterrohlings, welche die einzelnen Leitersegmente (3) miteinander verbinden, begrenzt sind.

20. Verfahren nach einem der Ansprüche 13 bis 17,
**dadurch gekennzeichnet,**
**daß** einzelne vorgefertigte Leitersegmente (3) verwendet werden, die in einen Montagekorb eingesetzt sind.

21. Verfahren nach Anspruch 20,
**dadurch gekennzeichnet,**
**daß** die Zwischenräume (18) radial außen durch Distanzleisten (16), welche Teil des Montagekorbes sind, begrenzt sind.

22. Verfahren zur Herstellung eines luftspaltisolierten Kommutators nach Anspruch 1, umfassend die folgenden Schritte:
- Einlegen metallischer Leitersegmente (3) in ein erstes Werkzeug;
- Einpressen einer der beiden Formmassen in einen zugeordneten Hohlraum des ersten Werkzeugs;
- Aushärtenlassen der eingepreßten Formmasse;
- Entnehmen des die Leitersegmente (3) und die ausgehärtete Formmasse umfassenden Zwischenprodukts aus dem ersten Werkzeug und Einlegen dieses Zwischenprodukts in ein zweites Werkzeug;
- Einpressen der anderen Formmasse in einen zugeordneten Hohlraum des zweiten Werkzeugs;
- Aushärtenlassen der im zweiten Einpreßschritt eingepreßten Formmasse;
- Entnehmen des Kommutators aus dem Werkzeug.

23. Verfahren nach Anspruch 22,
**dadurch gekennzeichnet,**
**daß** es sich bei der zur Herstellung des Kriechstromschutzbelags verwendeten Formmasse um einen kriechstromfesten thermoplastischen Kunststoff handelt.

## Claims

1. A commutator for an electrical machine comprising a carrier body (1) made from molding compound and a plurality of metallic conductor segments (3), which are uniformly arranged about the commutator axis (2) on said carrier body, with connection elements arranged thereon, an air insulation gap existing between each two adjacent conductor segments and said carrier body (1) exhibiting two regions made from different molding compounds, namely a carrier body base (11) and a leakage current protective covering (9), the radially outwardly open leakage current protective covering (9), which comprises insulating surfaces (10) charged with leakage current, being arranged between said conductor segments (3) and consisting of a first molding compound that is more resistant to leakage current than the second molding compound of the carrier body base (11),
**characterized in that**
the molding compound of the carrier body base and the molding compound of the leakage current protective covering are pressed against each other in a positively fitting manner.

2. A commutator according to claim 1,
**characterized in that**
the molding compound of the leakage current protective covering (9) is based on polyester, melamine formaldehyde, epoxide, allyl ester, or another resin that is resistant to leakage current, or a combination of several of these resins, or a combination of at least one of these resins with phenolic resin.

3. A commutator according to claim 1 or claim 2,
**characterized in that**
the carrier body base (11) has better mechanical properties, in particular a higher thermal resistance, than the leakage current protective covering (9).

4. A commutator according to any one of claims 1 to 3,
**characterized in that**
the carrier body base (11) consists of a molding compound comprising phenolic resin.

5. A commutator according to any one of claims 1 to 4,
**characterized in that**
the largest width of the individual regions of the leakage current protective covering (9) measured in the circumferential direction is larger than the width of the air insulation gap existing between each two adjacent conductor segments (3).

6. A commutator according to claim 5,
**characterized in that**
the width of the individual regions of the leakage current protective covering (9) increases in the radial direction from the outside inwards, the individual regions of the leakage current protective covering resting against each of the two adjacent conductor segments (3) in a positively fitting manner over its entire layer thickness.

7. A commutator according to any one of claims 1 to 6,
**characterized in that**
the insulating surfaces (10) of the leakage current protective covering (9), which are pointing radially outwards, each have an outwardly facing nose (12) adjacent to the connection elements.

8. A commutator according to any one of claims 1 to 7,
**characterized in that**
the leakage current protective covering (9) and the carrier body base (11) rest against each other at each
common boundary surface (19).

9. A commutator according to any one of claims 1 to 8,
**characterized in that**
the leakage current protective coating (9) has grooves (22), which are pointing outwards and extent over a portion of the thickness, and which are oriented towards the respective associated air insulation gap and continue it radially inwards.

10. A commutator according to claim 8,
**characterized in that**
the boundary surfaces (19) are unevenly, relief-like structured, so that the leakage current protective covering (9) and the carrier body base (11) interlock positively.

11. A commutator according to claim 8, **characterized in that** the boundary surfaces (19) are even.

12. A commutator according to any one of claims 1 to 11,
**characterized in that**
the conductor segments (3) have anchor parts (5), which are anchored in both the leakage current protective covering (9) and the carrier body base (11).

13. A method for producing a drum commutator according to claim 1 comprising the following steps:
- placing metallic conductor segments (3) in a mold;
- Filling a first molding compound that is relatively resistant to leakage current into spaces (18) existing between each of two adjacent conductor segments (3), the spaces being delimited radially on the inside by a rib (17) of a first inner mold (14);
- removing the first inner mold (14);
- inserting a second inner mold that defines the contour of the carrier body (1) to be molded;
- pressing a second, relatively heat-resistant and dimensionally stable molding compound into the mold;
- allowing the carrier body to cure;
- removing the commutator from the mold.

14. A method according to claim 13,
**characterized in that**
the first molding compound cures before the second molding compound is pressed in.

15. A method according to claim 13,
**characterized in that**
the first molding compound is based on thermosetting plastics and is formed when the second molding compound is pressed in, and
the first molding compound is not yet cured at the time when the second molding compound is pressed in.

16. A method according to claim 15,
**characterized in that**
both molding compounds are crosslinked and cured by pressure and heat of the second molding compound.

17. A method according to any one of claims 13 to 16,
**characterized in that**
the first molding compound is based on polyester, melamine formaldehyde, epoxide, allyl ester, or other resins that are resistant to leakage current, or combinations of these resins.

18. A method according to any one of claims 13 to 17,
**characterized in that**
the conductor segments (3) are initially part of a one-piece conductor blank and are only separated from each other after molding of the carrier body (1).

19. A method according to claim 18,
**characterized in that**
the spaces (18) are delimited radially on the outside by bridge pieces of the conductor blank, which connect the individual conductor segments (3) with one another.

20. A method according to any one of claims 13 to 17,
**characterized in that**
individual prefabricated conductor segments (3) are used, which are inserted in an assembly basket.

21. A method according to claim 20,
**characterized in that**
the spaces (18) are delimited radially on the outside by spacing strips (16), which are part of the assembly basket.

22. A method for producing an air gap-insulated commutator according to claim 1 comprising the following steps:
- placing metallic conductor segments (3) in a first mold;
- pressing one of the two molding compounds into an allocated hollow space of the first mold;
- allowing the molding compound pressed in to cure;
- removing the intermediate product comprising the conductor segments (3) and the cured molding compound from the first mold and placing this intermediate product in a second mold;
- pressing the other molding compound into an allocated hollow space of the second mold;
- allowing the molding compound pressed-in in a second pressing-in step to cure;
- removing the commutator from the mold.

23. A method according to claim 22,
**characterized in that**
the molding compound used for the production of the leakage current protective covering is a thermoplastic material that is resistant to leakage current.

## Revendications

1. Collecteur pour une machine électrique, comprenant un corps de support (1) réalisé à partir d'une masse moulable et une pluralité de segments conducteurs (3) en métal qui sont disposés sur ledit corps de façon régulière autour de l'axe (2) du collecteur et qui sont pourvus d'éléments de connexion, les segments conducteurs étant isolés les uns des autres par des fentes d'air disposés entre eux et le corps de support (1) comportant deux zones réalisées à partir de matières moulables différentes, à savoir une base de corps de support (11) et un revêtement protecteur de courants de fuite (9), le revêtement protecteur de courants de fuite (9), qui s'ouvre radialement vers l'extérieur et qui est pourvu de surfaces isolantes (10) chargées de courants de fuite, étant disposé entre les segments conducteurs (3) et étant constitué d'une première masse moulable qui est plus résistante aux courants de fuite que la deuxième masse moulable de la base du corps de support (11),
**caractérisé en ce que**
la masse moulable de la base du corps de support et la masse moulable du revêtement protecteur de courants de fuite sont moulés de façon à constituer un ensemble cohérent.

2. Collecteur selon la revendication 1,
**caractérisé en ce que**
la masse moulable pour le revêtement protecteur de courants de fuite (9) est à base de polyester, de mélamine-formaldéhyde, d'époxyde, d'ester allylique ou d'une autre résine résistant aux courants de fuite ou d'une combinaison de plusieurs desdites résines ou d'une combinaison d'au moins une desdites résines avec une résine phénolique.

3. Collecteur selon la revendication 1 ou la revendication 2,
**caractérisé en ce que**
la base du corps de support (11) a des propriétés mécaniques supérieures à celles du revêtement protecteur de courants de fuite (9), notamment en ce qui concerne la résistance thermique.

4. Collecteur selon l'une des revendications 1 à 3,
**caractérisé en ce que**
la base du corps de support (11) est constituée d'une masse moulable contenant de la résine phénolique.

5. Collecteur selon l'une des revendications 1 à 4,
**caractérisé en ce que**,
pour chacune des zones du revêtement protecteur de courants de fuite (9), la largeur mesurée dans le sens de la circonférence est supérieure à la largeur de chacune des fentes d'air isolant les segments conducteurs (3) les uns des autres.

6. Collecteur selon la revendication 5,
**caractérisé en ce que**
la largeur de chacune des zones du revêtement protecteur de courants de fuite (9) s'accroit en avançant radialement de l'extérieur vers l'intérieur, chacune des zones du revêtement protecteur de courants de fuite formant à travers toute leur épaisseur de couche un ensemble cohérent avec les deux segments conducteurs (3) voisins.

7. Collecteur selon l'une des revendications 1 à 6,
**caractérisé en ce que**
les surfaces isolantes (10) du revêtement protecteur de courants de fuite (9), qui sont radialement orientées vers l'extérieur, comportent chacune un ergot (12) à proximité des éléments de connexion.

8. Collecteur selon l'une des revendications 1 à 7,
**caractérisé en ce que**
le revêtement protecteur de courants de fuite (9) et la base du corps de support (11) s'épousent en formant des interfaces (19) communes.

9. Collecteur selon l'une des revendications 1 à 8,
**caractérisé en ce que**
le revêtement protecteur de courants de fuite (9) est pourvu d'encoches (22) orientées vers l'extérieur et s'étendant sur une partie de l'épaisseur, chacune desdites encoches étant alignée une des fentes d'air isolantes, prolongeant ainsi cette dernière radialement vers l'intérieur.

10. Collecteur selon la revendication 8,
**caractérisé en ce que**
les interfaces (19) présentent une structure rugueuse en relief, le revêtement protecteur de courants de fuite (9) et la base du corps de support (11) étant ainsi imbriqués l'un dans l'autre pour former un ensemble cohérent.

11. Collecteur selon la revendication 8,
**caractérisé en ce que**
les interfaces (19) sont lisses.

12. Collecteur selon l'une des revendications 1 à 11,
**caractérisé en ce que**
les segments conducteurs (3) présentent des éléments d'ancrage (5) qui sont ancrés à la fois dans le revêtement protecteur de courants de fuite (9) et dans la base du corps de support (11).

13. Procédé de fabrication d'un collecteur à tambour selon la revendication 1, comprenant les étapes suivantes :
- pose de segments conducteurs (3) métalliques dans une matrice;
- Remplissage des interstices (18) situés entre chaque deux segments conducteurs (3) voisins avec une masse moulable relativement résistante aux courants de fuite, les interstices étant chacun délimité radialement vers l'intérieur par une nervure (17) d'une première matrice intérieure (14);
- Retrait de la première matrice intérieur (14);
- pose d'une deuxième matrice intérieure définissant la forme du corps de support (1) à réaliser;
- remplissage sous pression de la matrice avec la deuxième masse moulable qui est relativement résistante à la chaleur et à la déformation;
- délai d'attente permettant au corps de support de durcir;
- démoulage du collecteur.

14. Procédé selon la revendication 13,
**caractérisé en ce qu'**
on laisse durcir la première masse moulable avant d'injecter sous pression la deuxième masse moulable.

15. Procédé selon la revendication 13,
**caractérisé en ce que**
la première masse moulable est à base de matières thermodurcissables et qu'elle est déformée lorsque la deuxième masse moulable est injectée sous pression et que le durcissement de la première masse moulable n'est pas encore achevée lorsque la deuxième masse moulable est injectée sous pression.

16. Procédé selon la revendication 15,
**caractérisé en ce que**
les deux matières moulables subissent une réticulation et un durcissement en raison de l'apport de pression et de chaleur par la deuxième masse moulable.

17. Procédé selon l'une des revendications 13 à 16,
**caractérisé en ce que**
la première masse moulable est à base de polyester, de mélamine-formaldéhyde, d'époxyde, d'ester allylique ou d'une autre résine résistant aux courants de fuite ou d'une combinaison de plusieurs desdites résines.

18. Procédé selon l'une des revendications 13 à 17,
**caractérisé en ce que**,
initialement, les segments conducteurs (3) font partie d'une préforme conductrice solidaire, la séparation n'ayant lieu que suite à la réalisation de la forme finale du corps de support (1).

19. Procédé selon la revendication 18,
**caractérisé en ce que**,
du côté extérieur, les interstices (18) sont radialement délimités par les parties de la préforme conductrice qui relient les différents segments conducteurs (3) les uns autres tels des ponts.

20. Procédé selon l'une des revendications 13 à 17,
**caractérisé en ce qu'**
on utilise des segments conducteurs (3) préfabriqués et non solidaires qui sont placés dans un support d'assemblage.

21. Procédé selon la revendication 20,
**caractérisé en ce que**
du côté extérieur, les interstices (18) sont radialement délimités par des cales de positionnement (16) faisant partie du support d'assemblage.

22. Procédé de fabrication d'un collecteur à isolation par des fentes d'air selon la revendication 1, comprenant les étapes suivantes :
- pose de segments conducteurs (3) métalliques dans une première matrice;
- injection sous pression de l'une des deux matières moulables dans une cavité désignée de le première matrice;
- délai d'attente permettant à la masse moulable injectée sous pression de durcir;
- démoulage de la pièce intermédiaire comprenant les segments conducteurs (3) et la masse moulable durcie et pose de ladite pièce intermédiaire dans une deuxième matrice;
- injection sous pression de l'autre matière moulable dans une cavité désignée de la deuxième matrice;
- délai d'attente permettant à la masse moulable injectée sous pression dans la deuxième étape d'injection sous pression de durcir;
- démoulage du collecteur.

23. Procédé selon la revendication 22,
**caractérisé en ce que**
la masse moulable utilisée pour fabriquer le revêtement protecteur de courants de fuite est une matière thermoplastique résistant aux courants de fuite.
